Europäisches Patentamt

European Patent Office

Office européen des brevets

(19)

(11) Veröffentlichungsnummer: **0 137 884**
**B1**

(12) # EUROPÄISCHE PATENTSCHRIFT

(45) Veröffentlichungstag der Patentschrift:
**03.08.88**

(51) Int. Cl.⁴: **C 08 G 69/16**

(21) Anmeldenummer: **83730095.3**

(22) Anmeldetag: **07.10.83**

(54) Verfahren zur kontinuierlichen Entmonomerisierung und Nachpolymerisierung von Polyamid 6 und Vorrichtung zur Durchführung dieses Verfahrens.

(43) Veröffentlichungstag der Anmeldung:
**24.04.85 Patentblatt 85/17**

(45) Bekanntmachung des Hinweises auf die Patenterteilung:
**03.08.88 Patentblatt 88/31**

(84) Benannte Vertragsstaaten:
**BE CH DE FR GB IT LI NL**

(56) Entgegenhaltungen:
**BE - A - 658 309**
**DE - A - 1 202 251**

(73) Patentinhaber: **KARL FISCHER INDUSTRIEANLAGEN GMBH, Holzhauserstrasse 159, D-1000 Berlin 27 (DE)**

(72) Erfinder: **Gerking, Lüder, Dr.-Ing., Amselstrasse 26, D-1000 Berlin 33 (DE)**
Erfinder: **Panke, Günter, Ing.-grad., Brunowstrasse 30D, D-1000 Berlin 27 (DE)**

(74) Vertreter: **Henkel, Feiler, Hänzel & Partner, Kurfürstendamm 170, D-1000 Berlin 15 (DE)**

**Beschreibung**

Die Erfindung betrifft ein Verfahren zur kontinuierlichen Entmonomerisierung und Nachpolymerisierung von Polyamid 6 (Polycaproamid)-Schmelzen sowie eine Vorrichtung zur Durchführung des Verfahrens.

Die Herstellung des Polyamids 6 erfolgt durch Umwandlung von ε-Caprolactam, wobei die erhaltene Polymerschmelze vorzugsweise direkt zu geformten Artikeln wie Fäden oder Filmen weiterverarbeitet wird.

Bei der Polyamid 6-Polymerisation wird flüssiges ε-Caprolactam in einem ein- oder mehrstufigem Verfahren unter Zusatz von Wasser oder anderen Katalysatoren unter Einwirkung von Wärme in ein Polymerisat umgewandelt, welches im Gleichgewichtszustand noch etwa 10% Monomere und Oligomere enthält. Der Anteil der Monomere liegt zwischen 60 und 70%, der der Oligomere (Dimere, Trimere und höhere Oligomere) zwischen 30 und 40%. Da sich die Monomere und Oligomere in der späteren Anwendung des Polymers, z.B. als textile Fäden, nachteilig in den Folgeprozessen und den späteren Endanwendungen erweisen, müssen sie entfernt werden. Die verfahrensmässig, verglichen mit anderen Polymeren, einfache Polymerisation von Polyamid 6 (z.B. in einem einstufigem Prozess in den sogenannten VK-Rohr) muss daher durch nachfolgende Prozessstufen ergänzt werden, in denen die Monomere und Oligomere, der sogenannte Restextrakt, entfernt wird. Hierzu sind seit vielen Jahren Verfahren in Gebrauch, bei denen das Polymerisat zunächst in Granulat überführt und anschliessend durch eine Extraktion in Wasser in seinem Restextrakt auf weniger als 1% reduziert wird. Anschliessend muss das Granulat getrocknet werden und zur Weiterverarbeitung beispielsweise in Extrudern wieder aufgeschmolzen werden. Es sind andere Verfahren bekannt, bei denen die Entmonomerisierung in der Schmelze durchgeführt wird, und zwar entweder durch Abdestillieren der niedermolekularen Anteile mit Hilfe eines inerten Trägergases wie Stickstoff oder Wasserdampf oder durch das vielfach angewandte Verfahren der Vakuumdestillation. Hierbei wird ein Vorpolymerisat mit einem dem Gleichgewichtszustand entsprechenden niedermolekularen Anteil von etwa 10% oder auch höher, d.h. bevor sich der Gleichgewichtszustand eingestellt hat, einer weiteren Stufe zugeführt, in der die niedermolekularen Anteile entfernt werden, und es kann auch eine Nachpolymerisation/Nachkondensation im schmelzflüssigen Zustand durchgeführt werden.

Alle bekanntgewordenen Verfahren haben den Nachteil, dass zur Entmonomerisierung, Homogenisierung, intensivem Durchmischen und Einstellung des Gleichgewichtszustandes durch Einhaltung einer bestimmten Verweilzeit unter konstanten Temperaturbedingungen sowie gegebenenfalls einer gewünschten Nachpolymerisation mehrere Apparate hintereinander eingesetzt werden müssen, die jeder für sich diese verfahrenstechnischen Aufgaben erfüllen. Dabei gibt es durchaus Apparate, die auch mehrere, aber nie in einem alle notwendigen Verfahrensschritte erfüllen.

So ist durch die DE-PS 1 218 110 ein Verfahren bekannt, in dem der Restextrakt (Monomere und Oligomere) in zwei Vakuumbehandlungen reduziert wird und zwischen diesen nachkondensiert wird, d.h. sich nach der (Vor-)Polymerisation noch drei Verfahrensschritte in getrennten Apparaten anschliessen. Die Nachpolymerisation kann auch im Sumpf eines Dünnschichtverdampfers vollzogen werden. Es ist aber bekannt, dass die Verweilzeiten der einzelnen Polymerteile zwischen Sumpfoberfläche und Auslass sehr ungleich sind, weil keine zwangsweise Förderung dazwischen vorliegt. In einem anderen bekanntgewordenen Verfahren, beschrieben in der US-PS 3 578 640, wird ein Polymerisat, welches in einem Vorpolymerisator und einem Polyadditionsreaktor, also bereits zweistufig, hergestellt wird, einem Vakuumverdampfer zugeführt und durchläuft anschliessend einen Endreaktor, in dem die Schmelze durch eine Schnecke zwangsweise hindurchgefördert wird. Auch in diesem Verfahren wird in zwei getrennten Apparaten entmonomerisiert und nachkondensiert, wobei der Endreaktor gleichzeitig für die Homogenisierung der Schmelze sorgt. Ein weiteres derartiges Verfahren ist durch die DE-OS 1 570 570 bekannt. Die Idee, für die Entmonomerisierung einen sogenannten «Wendelschneckenverdampfer» einzusetzen, hat aber keine praktische Anwendung gefunden. Sie hätte auch den Nachteil, dass es zu sehr kurzen, für die Entmonomerisierung vielleicht nicht ausreichenden Verweilzeiten durch die zwangsweise Förderung mittels der stetigen Wendelschnecke kommt, oder es käme, wenn am Austritt weniger Schmelze abgenommen wird als der Förderwirkung der Wendelschnecke entspricht, zu unkontrollierten Rückströmungen und damit ungleichen Verweilzeiten. Über eine gleichzeitige Nachpolymerisation der Schmelze ist nicht vermerkt.

Aus der DE-C 2 100 615 und DE-C 2 114 080 ist ein liegender Reaktor zur Herstellung von Polyester bekannt, der teilweise mit Schmelze gefüllt ist und im wesentlichen zylinderförmig mit horizontaler Achse ausgebildet ist. Ein konzentrisch ausgestalteter Käfig ist als um die Reaktorachse drehbar angetriebener Rotor ausgebildet, an dessen Umfang ringscheibenförmige Elemente und/oder Lochscheiben und/oder Speichenräder und/oder Speichenringe befestigt sind, die teilweise in die Schmelze hineintauchen.

Der vorliegenden Erfindung liegt die Aufgabe zugrunde, die Entmonomerisierung, d.h. die Entfernung von monomerem ε-Caprolactam und Oligomeren und die Nachpolymerisierung in der Schmelze in nur einer Verfahrensstufe mittels einer einzigen Vorrichtung durchzuführen. Diese Aufgabe wird erfindungsgemäss durch die kennzeichnenden Merkmale der Ansprüche 1 und 6 gelöst.

Die gestellten Aufgaben der Entmonomerisierung und Nachkondensierung von Polyamid 6 in der flüssigen Phase können durch den Einsatz des

Scheibenreaktors gegenüber anderen bekanntgewordenen Verfahren besser erfüllt werden. Dem Reaktor kann sowohl ein Vorpolymerisat wie ein im Gleichgewicht befindliches Polymerisat zugeführt werden aus einer vorhergehenden Polymerisation, die ebenfalls kontinuierlich arbeitet. Es ist aber auch möglich, dem Scheibenreaktor Schmelze zuzuführen, die beispielsweise durch Extruder aus Granulat hergestellt wurde oder ihn aus diskontinuierlich arbeitenden Autoklaven zu speisen, wobei gegebenenfalls mehrere Autoklaven abwechselnd in ein speicherndes Zwischengefäss entleert werden und der Reaktor wiederum aus diesem gespeist wird.

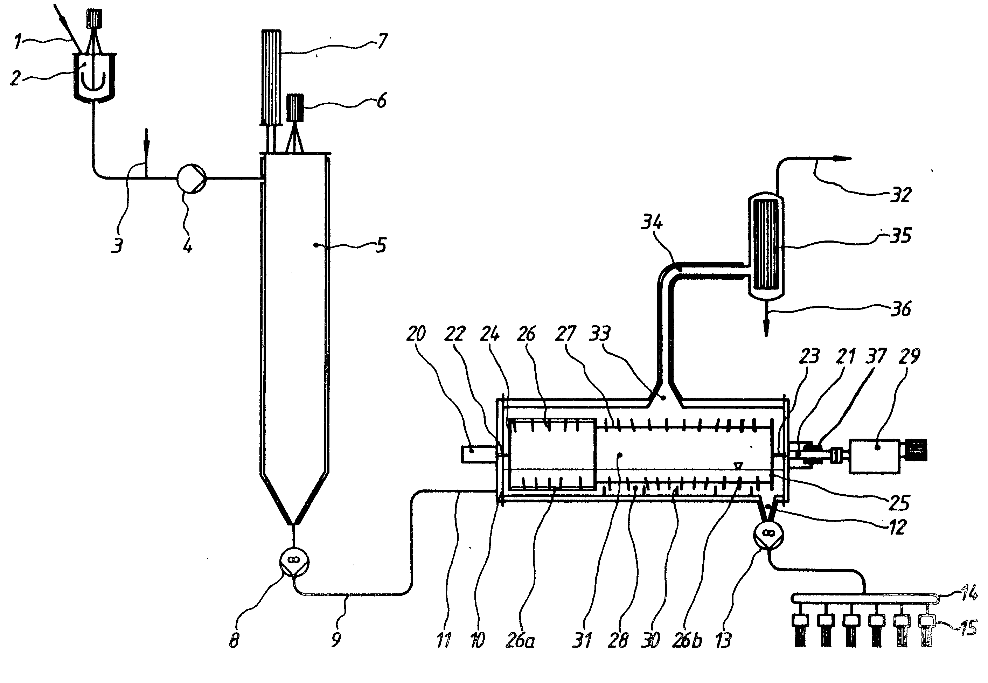

Weitere Vorteile ergeben sich aus den Unteransprüchen. Eine bevorzugte Anwendung des Verfahrens wird im folgenden anhand der Figur beschrieben.

Hierbei handelt es sich um ein vollkontinuierliches Verfahren, in dem Polyamid-6-Polymer in zwei Apparaten aus dem flüssigen ε-Caprolactam hergestellt und anschliessend zu Fäden oder Filmen direkt weiterverarbeitet wird. Eine flüssigfest Extraktion entfällt, ebenso die Trocknung und Wiederaufschmelzung und die Nachkondensation in fester Phase, falls relative Lösungsviskositäten $\eta_{rel}$ von bis zu etwa 4 (gemessen bei 20–25 °C, 1 g Polymer pro 100 cm$^3$ 96%iger Schwefelsäure) für technische Garne erforderlich werden.

Die Polymerisationslage besteht aus zwei Stufen, einem VK-Rohr und einem Scheibenreaktor. Falls das Lactam in fester Form vorliegt, wird es bei 1 oben in einen beheizten Lösebehälter 2 mit Rührwerk stetig eingespeist und verlässt diesen in flüssiger Form. In den Lösebehälter können Additive, insbesondere Wasser als Katalysator, aber auch Kettenbegrenzer wie Essigsäure und Pigmente wie Titanoxid eingespeist werden. Diese können jedoch auch bei 3 in den Lactamstrom eindosiert werden. Eine Dosierpumpe 4 fördert dann das Gemisch in den oberen Teil der ersten Polymerisationsstufe, in diesem Fall ein VK-Rohr 5. In dessen oberem Teil kann ein Rührwerk 6 angeordnet sein, ferner sind am Kopf des VK-Rohres Brückenkondensatoren 7 zur Niederschlagung der entweichenden Lactamdämpfe angebracht, die verflüssigt dem VK-Rohr wieder zufliessen, während die zur Einleitung der Polymerisation benötigten Wasserdämpfe forgeführt werden. Derartige VK-Rohre sind seit langem bekannt, so dass sie hier nicht näher beschrieben zu werden brauchen. Sie sind aussen beheizt, ebenso im Innern durch Rohrregister oder Plattenwärmeaustauscher, wobei die Beheizung vorteilhaft durch Diphyldampf geschieht. Unterhalb des Austritts aus dem VK-Rohr befindet sich eine einen konstanten Volumenstrom einhaltende Austragspumpe, beispielsweise eine Zahnradpumpe 8, die das Vopolymerisat über eine Leitung 9 in den Reaktor 10 von unten bei 11 zuführt. Das Polymerisat verlässt den Reaktor durch den Austrittstutzen 12 und wird wiederum durch eine dosierende Zahnradpumpe 13 über einen Schmelzeverteiler 14 einzelnen Spinnstellen 15 zugeleitet. Die Pumpe 13 erzeugt dabei den notwendigen Druck, um die Schmelze in den Spinnstellen über nicht näher gezeigte Spinndüsen in Form von Fäden auszupressen. Diese werden in bekannter Weise über nicht gezeigte Abkühlstrecken und Präparationseinrichtungen von Wicklern abgezogen und zu Spulen aufgewickelt in Fällen, wo man Filamente herstellen will, oder im Falle der Faserherstellung durch Abziehvorrichtungen in Form von Fadenkabeln zusammengefasst, diese in Kannen abgelegt und anschliessend verstreckt, bzw. es werden Fadenkabel direkt ohne Zwischenlagerung verstreckt. Danach werden die Fadenkabel zu Stapelfasern zerschnitten. Bei der Herstellung von Filmen wird die Schmelze bei 15 statt durch Spinndüsen durch Breitschlitzdüsen ausgepresst. Sollte Granulat hergestellt werden, so werden Polymerdrähte von 1–3 mm Durchmesser ausgepresst, in Wasserbädern abgekühlt und anschliessend zu Schnitzeln in Schneideinrichtungen granuliert. Im Innern des Scheibenreaktors 10 befindet sich ein bei 20 und 21 über Wellenzapfen 22 und 23 gelagerter Rotor.

Der Rotor wird gebildet aus den ringscheibenförmigen Elementen 26, die miteinander über Querstäbe oder Zuganker 27 verbunden sind. Über Endscheiben oder Speichenräder 24 und 25 ist der Rotor mit den Wellenzapfen 22 und 23 verbunden.

Die ringscheibenförmigen Elemente, die als Scheiben, gelochte Scheiben, Siebscheiben oder Speichen ausgebildet sind und im vorderen niederviskosen Teil auch mit Schöpfleisten versehen sein können, stellen also einen zylindrischen Käfig dar, der im Innern keine Welle hat, an der sich Polymerteile absetzen und dort über ungleiche Zeiten verweilen können. Über bekannte hier nicht gezeigte Füllstandsanzeigen wird durch Regeln der Pumpen ein Flüssigkeitsniveau 28 eingestellt. Aus der Höhe des Füllstandes ergibt sich die Verweilzeit der Schmelze im Reaktor. Der Antrieb 29 versetzt den Reaktor in Drehung. Die ringscheibenförmigen Elemente tauchen bei einer Umdrehung in die Schmelze ein, bewegen sich durch diese hindurch, treten wieder aus und schleppen Schmelze als Film an den Flächen mit, wobei diese durch Schwerkraft wieder nach unten fällt.

Während der Schmelzespiegel nur eine verhältnismässig geringe Oberfläche hat, werden durch diese Filmbildung an den ringscheibenförmigen Elementen ständig neue und sehr grosse Oberflächen gebildet. Die Ringscheiben reinigen sich durch die Scherkräfte unterhalb des Schmelzespiegels immer wieder und es kommt zu keinen unkontrollierten unterschiedlichen Verweilzeiten. Gleichzeitig wird das Schmelzevolumen durch das Eintauchen der ringscheibenförmigen Elemente durchmischt.

Im Raum 31 oberhalb des Schmelzniveaus 28 können die flüchtigen Bestandteile der Schmelze, also Wasser und Monomere sowie Oligomere, entweichen. Die Ausdampfung wird verstärkt, wenn dieser Raum unter Vakuum steht, welches bekannterweise durch Vakuumpumpen oder -strahler bei 32 angelegt wird. Die entweichenden Dämpfe dringen aus dem Raum 31 über den Austrittsstutzen 33 und die Leitung 34 in einen Kondensator 35, in dem in bekannter Weise durch Kühleinbauten das flüchtige Lactam und Oligomere abgeschieden und bei 36 fortgeleitet werden.

Die ringscheibenförmigen Elemente 26 sind in einer bestimmten Schrägstellung gegenüber den Endscheiben 24 und 25 angestellt, wobei die Schrägstellung der folgenden Scheibe immer um einen bestimmten Winkel in Drehrichtung versetzt ist. Verfolgt man die Punkte der ringförmigen Elemente, die der Endscheibe 24 am nächsten liegen, so beschreiben diese sogenannten «Spurpunkte» eine Schraubenlinie mit der Wirkung, dass bei richtiger Drehrichtung die Schmelze von 11 nach 12 gefördert wird.

Dadurch kann eine bestimmte gewünschte Fördergeschwindigkeit durch den gesamten Apparat vorgegeben werden, die in Betrieb durch Änderung der Drehzahl in bestimmten Bereichen gesteuert werden kann. Es hat sich als vorteilhaft erwiesen, am Eintritt, wo die Schmelze in der Regel erheblich dünnflüssiger als am Austritt ist, neben den ringscheibenförmigen Elementen noch zusätzliche Schöpfleisten 26a anzubringen und am anderen Ende nur noch Ringe und Speichen 26b. Am Reaktorboden sind Wehre 30 befestigt, die ein direktes Strömen der Schmelze entlang des Reaktorbodens verhindern.

Da der Reaktor unter Vakuum betrieben wird, ist die bei 37 nach aussen führende Antriebswelle abzudichten. Hier haben sich Kombinationen von Labyrinth- und Gleitdichtungen bewährt, die gleichzeitig verhindern, dass Feststoffe aus dem Reaktorinhalt in sie eindringen. Im Unterschied zu den bekanntgewordenen Verfahren zur Entgasung von Schmelzen, wozu auch Entgasungsextruder zählen sowie Dünnschichtverdampfer mit umlaufenden Wischern, und zu Apparaten für die Kondensation, die häufig ähnlich ausgeführt werden und unter geringerem Vakuum betrieben werden, erfüllt der Reaktor alle drei an ihn gestellten Anforderungen, nämlich die ständige Erzeugung neuer Oberflächen in Form von dünnen Filmen, aus denen Wasser, Monomere und Oligomere entweichen können, die intensive Durchmischung des Reaktorinhaltes und die Erzielung eines bestimmten Grades der zwangsweisen Durchführung des Polymers durch den Reaktorsumpf zur Einhaltung eines engen Verweilzeitspektrums der Schmelze, entschieden besser. Der Aufwand ist durch den Einsatz nur eines Apparates für diese Aufgaben geringer. Die an das Endprodukt gestellten Anforderungen hinsichtlich geringem Restextrakt sowie gleichmässiger und gegebenenfalls erhöhter Viskosität werden erfüllt und gegenüber den bisher bekannten Verfahren allgemein gebessert.

Das anhand der Figur beschriebene Verfahren gestattet die Herstellung von Fäden mit Restextrakten unter 2%. Je nach Verweilzeit in den beiden Stufen VK-Rohr 5 und Reaktor 10 kann die Polymerschmelze bei 8 beispielsweise relative Lösungsviskositäten zwischen 1,9 und 2,2 haben mit Restextrakten zwischen 10 und 14% und bei 12 austreten mit Viskositäten von 2,5 bis 4 und Restextrakten von unter 1,5%. Um einen möglichst geringen Wiederanstieg des Restextraktes in den Verteilungsleitungen 14 bis zum Ausspinnen bei 15 zu haben, müssen diese möglichst kurz gehalten und in der Temperatur tief gefahren werden.

Es ist vorteilhaft, die Schmelztemperatur in der Leitung 9 zu erhöhen, da durch die Ausdampfung von Monomeren und Wasser die Schmelze abkühlt und die Bildung von dünnen Filmen beeinträchtigt wird. Die Entfernung des niedermolekularen Anteils kann gesteigert werden, wenn in den Reaktor Stickstoff oder Wasserdampf eingeführt wird. Statt vor der Polymerisation können Pigmente wie Titanoxid ($TiO_2$) auch in den Reaktor eingeführt, beispielsweise dem Hauptstrom bei 11 zugemischt werden.

Der Wechsel des Mattierungsgrades des Polymers durch unterschiedliche Zufuhr von $TiO_2$ oder ein Farbstoffwechsel kann schneller durchgeführt werden, als wenn man das gesamte VK-Rohr sauber fahren muss.

Die Leistung eines VK-Rohres kann man bekanntlich steigern, wenn man einen unter Druck arbeitenden Vorpolymerisator vorschaltet. In diesem Fall würde das angegebene Verfahren einschliesslich der erfindungsgemässen Entmonomerisierung und Nachpolymerisierung insgesamt aus drei Stufen bestehen.

Beispiel 1

Mit einem 1-stufigen VK-Rohr wurde ein Polymerisat hergestellt aus 98% Caprolactam, 1,9% Wasser und 0,1% Essigsäure und in einer Menge von 20,8 kg/h mittels einer Zahnradpumpe bei einer Temperatur von 276 °C entnommen. Der Restextrakt betrug 10,3% $\eta_{rel}$ (mit Extrakt) = 1,98. In der Verbindungsleitung zum Reaktor wurde die Schmelze auf 290 °C erwärmt. Der Reaktor hat einen Durchmesser von 660 mm und eine Länge von 1,450 mm.

Der im Innern drehende Rotor war aus gelochten Scheiben und an Speichen befestigten Ringen aufgebaut, wobei diese über Querverbindungen zu einem steifen Käfigläufer verbunden waren. Die mittlere Verweilzeit der Schmelze im Reaktor betrug 3,8 Stunden. Über eine weitere Zahnradpumpe und Schmelzeleitungen wurde das Polymer einer Spinndüse zugeführt und dort zu Fäden ausgesponnen. Die Verweilzeit zwischen Reaktor und Spinndüse betrug etwa 25 Minuten.

Die Fäden hatten einen Restextrakt von 1,42% und Viskosität von $\eta_{rel}$ = 3,23.

Durch eine Vakuumpumpe wurde der Druck im Reaktor auf 467 Pa gehalten. Entweichende Monomere und ein Teil der Oligomere wurden in einem Kondensator mit innenliegenden Kühlflächen niedergeschlagen. Die Leitung zwischen Reaktor und Kondensator war mit Warmwasser beheizt. Der Reaktor selbst wurde durch Diphyldampfheizung in seinem äusseren Mantel auf 284 °C gehalten. Die Drehzahl des Rotors betrug 1,5 U/min.

Beispiel 2

Unter den gleichen Bedingungen wie im Beispiel 1 wurde der Druck im Reaktor auf 1330–1600 Pa gehalten. In dem oberen Teil des Reaktors wurden 3% des Polymerdurchsatzes an Wasserdampf eingeführt. Die Lösungsviskosität blieb praktisch unverändert, der Restextrakt betrug 1,66%.

Beispiel 3

Polyamid-6-Granulat mit einem Restextrakt von 8,4% und $\eta_{rel} = 2$ wurde in einem Extruder aufgeschmolzen und über eine beheizte Leitung wie im Beispiel 1 dem Reaktor zugeführt. Der Druck im Reaktor betrug 667 Pa, der Durchsatz 19,2 kg/h. Die übrigen Bedingungen im Reaktor waren gleich. Die ausgesponnenen Fäden hatten einen Restextrakt von 1,5% und $\eta_{rel} = 3,26$.

Anhand der Beispiele lässt sich unter anderem der Einfluss des sehr wichtigen Verfahrensparameters, des Unterdrucks im Reaktor, ablesen. Brauchbare Restextraktwerte um und unter 2% lassen sich bei Drücken von weniger als 2000 Pa erreichen. Um Restextrakte von weniger als 1,5% zu erhalten, muss der Druck unter 667 Pa liegen. Um Restextrakte von deutlich unter 1,5% zu erhalten, muss der Druck im Reaktor unter 400 Pa liegen.

**Patentansprüche**

1. Verfahren zur kontinuierlichen Entmonomerisierung und Nachpolymerisierung von Polyamid 6-Schmelzen, dadurch gekennzeichnet, dass die Entmonomerisierung und die Nachpolymerisierung gleichzeitig unter Vakuum in einem teilweise mit der Schmelze gefüllten Reaktor (10) durchgeführt wird, der im wesentlichen zylinderförmig mit horizontaler Achse ausgebildet ist und der einen als zur Reaktorachse konzentrischen Käfig ausgestalteten, um die Reaktorachse drehbar angetriebenen Rotor enthält, an dessen Umfang gegenüber der zur Reaktorachse Senkrechten geneigte ringscheibenförmige Elemente (26) und/oder Lochscheiben und/oder Speichenräder (24, 25) und/oder Speichenringe (26b) befestigt sind, die teilweise in die Schmelze hineintauchen und zwischen denen am Boden des Reaktors Wehre (30) vorgesehen sind.

2. Verfahren nach Anspruch 1, dadurch gekennzeichnet, dass ein Vakuum von weniger als 2000 Pa verwendet wird.

3. Verfahren nach Anspruch 1 oder 2, dadurch gekennzeichnet, dass in den Reaktor (10) eine Polyamid 6-Schmelze eingeführt wird, die in einer oder mehreren vorhergehenden Stufen bis zum Gleichgewichtszustand von ungefähr 10 Gew.% polymerisiert wurde.

4. Verfahren nach Anspruch 1 oder 2, dadurch gekennzeichnet, dass in den Reaktor (10) eine Polyamid 6-Schmelze eingeführt wird, die in einer oder mehreren vorhergehenden Stufen mit einem höheren als dem Gleichgewichtszustand entsprechenden Anteil niedermolekularer Stoffe eingeführt wird.

5. Verfahren nach einem der Ansprüche 1 bis 4, dadurch gekennzeichnet, dass in den unter Vakuum stehenden Reaktor (10) ein Inertgas wie Stickstoff oder Wasserdampf eingeleitet wird.

6. Vorrichtung zur Durchführung des Verfahrens nach einem der Ansprüche 1 bis 5, dadurch gekennzeichnet, dass der Reaktor (10) im wesentlichen zylinderförmig mit horizontaler Achse ausgebildet ist und einen als zur Achse konzentrischen Käfig ausgestalteten, um die Achse drehbar angetriebenen Rotor enthält, an dessen Umfang ringscheibenförmige Elemente (26) und/oder Lochscheiben und/oder Speichenräder (24, 25) und/oder Speichenringe (26b) befestigt sind, die gegenüber der Senkrechten zur Reaktorachse geneigt sind, die teilweise in die Schmelze hineintauchen und dass am Boden des Reaktors (10) zwischen den sich drehenden ringscheibenförmigen Elementen (26) und/oder Lochscheiben und/oder Speichenringen (26b) Wehre (30) befestigt sind, die einen geradlinigen Durchlauf der Schmelze durch den Reaktor (10) verhindern.

7. Vorrichtung nach Anspruch 6, dadurch gekennzeichnet, dass die Wehre (30) in Achsrichtung des Reaktors (10) gesehen einen Querschnitt in Form eines Kreissegmentes oder eines Segmentes eines Kreisringes haben.

8. Vorrichtung nach Anspruch 6 oder 7, dadurch gekennzeichnet, dass die Wehre (30) einzelne Durchflussöffnungen aufweisen, deren Gesamtquerschnitt zum Reaktorenden hin zunimmt.

9. Vorrichtung nach einem der Ansprüche 6 bis 8, dadurch gekennzeichnet, dass die Neigung aufeinanderfolgender ringscheibenförmiger Elemente (26) und/oder Lochscheiben gegenüber der Senkrechten jeweils um einen vorgegebenen Winke in Drehrichtung gegeneinander versetzt ist.

10. Vorrichtung nach einem der Ansprüche 6 bis 9, dadurch gekennzeichnet, dass der Käfig parallel zur Reaktorachse verlaufende Stäbe (27) aufweist, die die ringscheibenförmigen Elemente (26) und/oder Lochscheiben und/oder Speichenringe (26b) verbinden.

11. Vorrichtung nach einem der Ansprüche 6 bis 10, dadurch gekennzeichnet, dass der Käfig zusätzlich mit an seinem Umfang sich zumindest über einen Teil der Reaktorlänge erstreckenden Schöpfleisten (26a) versehen ist.

**Claims**

1. A process for the continuous removal of residual monomers and the post-polymerisation of polyamide 6 melts, characterised in that the residual monomer removal and post-polymerisation is carried out simultaneously in a vacuum in a reactor (10) partially filled with the melt, said reactor being substantially cylindrical with a horizontal axis and containing a rotor in the form of a cage concentric to the reactor axis and driven rotatively about the reactor axis, there being fixed to the periphery of the rotor, and inclined with respect to the reactor axis vertical, ring-wheel-shaped elements (26) and/or perforated discs and/or spoke wheels (24, 25) and/or spoke rings (26b), which are partially immersed in the melt and between which weir-type barriers (30) are provided on the floor of the reactor.

2. The process according to Claim 1, characterised by using a vacuum of less than 2000 Pa.

3. The process according to Claim 1 or 2, characterised by introducing a polyamide 6 melt into the reactor (10) which has been polymerised in one or more preceding stages to a state of equilibrium of roughly 10% by wt.

4. The processus according to Claim 1 or 2, characterised by introducing a polyamide 6 melt into the reactor (10) introduced in one or more preceding stages with a higher proportion of low-molecular substances than that corresponding to the state of equilibrium.

5. The process according to Claims 1 to 4, characterised by introducing an inert gas such as nitrogen or steam into the reactor (10) which is in a vacuum.

6. An apparatus for carrying out the process according to one of Claims 1 to 5, characterised in that the reactor (10) is substantially cylindrical with a horizontal axis and contains a rotor in the form of a cage concentric to the axis and driven rotatively about the axis, there being fixed to the periphery of the rotor, and inclined with respect to the reactor axis vertical, ring-wheel-shaped elements (26) and/or perforated discs and/or spoke wheels (24, 25) and/or spoke rings (26b), which are partially immersed in the melt, and in that on the floor of the reactor (10), between the rotating ring-wheel-shaped elements (26) and/or perforated discs and/or spoke rings (26b), weir-type barriers (30) are fixed which prevent the melt from passing straight through the reactor (10).

7. The apparatus according to Claim 6, characterised in that the weir-type barriers (30) have the cross-section of a circle segment or ring segment, viewed in the axial direction of the reactor (10).

8. The apparatus according to Claim 6 or 7, characterised in that the weir-type barriers (30) exhibit individual through-openings, the overall cross-section of which increases towards the extremity of the reactor.

9. The apparatus according to one of Claims 6 to 8, characterised in that the inclination of successive ring-wheel-shaped elements (26) and/or perforated discs with respect to the vertical is offset in each case by a predetermined angle in the direction of rotation.

10. The apparatus according to one of Claims 6 to 9, characterised in that the cage exhibits bars (27) extending parallel to the reactor axis, which connect the ring-wheel-shaped elements (26) and/or perforated discs and/or spoke rings (26b).

11. The apparatus according to one of Claims 6 to 10, characterised in that the cage is additionally provided with scooping rails (26a) extending on its periphery over at least part of the length of the reactor.

**Revendications**

1. Procédé en continu d'extraction des monomères résiduels et de postpolymérisation de polyamide (6) fondue, caractérisé par le fait que l'extraction des monomères et la postpolymérisation sont effectuées simultanément sous vide dans un réacteur (10) rempli partiellement de matière fondue, ce réacteur étant de forme cylindrique avec un axe horizontal renfermant un rotor sous forme de cage concentrique tournant autour de l'axe et à la péripherie duquel, face à la verticale de l'axe du réacteur, sont fixés des éléments inclinés de forme annulaire (26) et/ou des disques à trous et/ou des roues à rayons (24, 25) et/ou des anneaux à rayons (26b) qui plongent partiellement dans la matière fondue et entre lesquels des barrières (30) sont prévues dans le bas du réacteur.

2. Procédé selon la revendication 1, caractérisé par le fait qu'un vide de moins de 2000 Pa est utilisé.

3. Procédé selon l'une des revendications 1 ou 2, caractérisé par le fait qu'une polyamide (6) fondue est introduite dans le réacteur (10) après qu'elle ait été polymérisée en une ou plusieurs étapes jusqu'à l'état d'équilibre d'environ 10% en poids.

4. Procédé selon l'une des revendications 1 ou 2, caractérisé par le fait qu'une poylamide (6) fondue est introduite dans le réacteur (10), antérieurement en une ou plusieurs étapes avec un pourcentage en matières de faible poids moléculaire plus élevé que celui correspond à l'état d'équilibre.

5. Procédé selon l'une des revendications 1 à 4, caractérisé par le fait qu'un gaz inerte, tel que l'azote ou la vapeur d'eau, est introduit dans le réacteur sous vide (10).

6. Dispositif pour la réalisation du procédé selon l'une quelconque des revendications 1 à 5, caractérisé par le fait que le réacteur (10) est de forme cylindrique avec un axe horizontal, en ce qu'il contient un rotor en forme de cage concentrique tournant autour de cet axe, à la périphérie duquel sont fixés des éléments annulaires (26) et/ou des disques à trous et/ou des roues à rayons (24, 25) et/ou des anneaux à rayons (26b) inclinés face à la verticale de l'axe du réacteur, qui plongent partiellement dans la matière fondue et en ce que dans le bas du réacteur (10), entre les éléments rotatifs de forme annulaire (26) et/ou des disques à trous et/ou des anneaux à rayons (26b), des barrières (30) sont fixées empêchant un passage direct de la matière fondue à travers le réacteur (10).

7. Dispositif selon la revendication 6, caractérisé par le fait que les barrières (30) vues en direction de l'axe du réacteur (10) ont une section transversale en forme de segment de cercle ou de segment d'anneau de cercle.

8. Dispositif selon l'une des revendications 6 ou 7, caractérisé par le fait que les barrières (30) présentent des ouvertures d'écoulement individuelles dont la section transversale complète augmente vers la sortie du réacteur.

9. Dispositif selon l'une des revendications 6 à 8, caractérisé par le fait que l'inclinaison des éléments annulaires successifs (16) et/ou des disques à trous est décalée par rapport à la verticale d'un angle donné dans le sens de la rotation.

10. Dispositif selon l'une des revendications 6 à 9, caractérisé par le fait que la cage présente des barres (27) parallèles à l'axe du réacteur et qui relient les éléments de forme annulaire (26) et/ou les disques à trous et/ou les anneaux à rayons (26b).

11. Dispositif selon l'une des revendications 6 à 10, caractérisé par le fait que la cage est équipée en outre à son entrée de barres (26a) s'étendant au moins sur une partie de la longueur du réacteur.